# EUROPEAN PATENT APPLICATION

(11) **EP 4 484 379 A1**
(43) Date of publication of application: **01.01.2025**
(21) Application number: 23819714.9
(22) Date of filing: 30.05.2023
(51) Int. Cl.: C01G 25/00, B01J 21/06, B01J 23/10, B01J 32/00

(54) **POROUS ZIRCONIA-BASED COMPOSITE OXIDE AND METHOD FOR MANUFACTURING POROUS ZIRCONIA-BASED COMPOSITE OXIDE**

(30) Priority: 06.06.2022 JP 2022091386
(71) Applicant: Daiichi Kigenso Kagaku Kogyo Co., Ltd., Osaka-shi, Osaka 541-0041 (JP)
(72) Inventor: MATSUMOTO, Kazuya, Osaka-shi Osaka 559-0025 (JP)
(74) Representative: Cabinet Beau de Loménie
(86) International application number: PCT/JP2023/020062
(87) International publication number: WO 2023/238734

(57) **Abstract**

A porous zirconia-based composite oxide satisfying all of the following (1) to (3) in a range of 2 nm or more and 200 nm or less in a pore distribution based on a BJH method, and having a pore volume of 0.01 cm³/g or more and 0.25 cm³/g or less in a range of more than 100 nm and 1000 nm or less in a pore distribution based on a mercury intrusion method, (1) a dV/dlogD peak is in a range of 2 nm or more and 100 nm or less; (2) a maximum value of the dV/dlogD peak is 1.5 or more and 5.0 or less; (3) a pore volume in a range of 2 nm or more and 100 nm or less is 0.30 cm³/g or more and 1.50 cm³/g or less.

## Description

### TECHNICAL FIELD

The present invention relates to a porous zirconia-based composite oxide and a method for manufacturing a porous zirconia-based composite oxide.

### BACKGROUND ART

Exhaust gas discharged from internal combustion engines of automobiles and the like, or combustion engines such as boilers contains hazardous substances such as carbon monoxide (CO), hydrocarbon (HC), and nitrogen oxide (NOx) which cause air pollution and the like. Efficient purification of these hazardous substances is an important issue from the viewpoint of preventing environmental contamination and the like. Exhaust gas purification catalysts which can purify the three hazardous substances at the same time have been actively studied. In the case of the exhaust gas purification catalysts, noble metal, such as rhodium, palladium, or platinum, is supported on a zirconia-based composite oxide, and then the product is applied to a honeycomb for use.

Patent Document 1 discloses a zirconia-based porous body having peaks in pore diameters of 8 to 20 nm and 30 to 100 nm in a pore distribution based on the BJH method and a total pore volume of 0.4 cc/g or more, and a zirconia-based porous body having a peak in a pore diameter of 20 to 110 nm in a pore distribution based on the BJH method and a total pore volume of 0.4 cc/g or more (particularly see claim 1).

Patent Document 2 discloses a zirconia-based porous body which has a total pore volume of at least 0.75 ml/g after heat treatment at 1000°C for 3 hours and in which the pore volume of pores having a diameter of 10 to 100 nm after heat treatment at 1000°C for 3 hours is at least 30% of the total pore volume (particularly see claim 1).

Patent Document 3 discloses a cerium-zirconium based composite oxide characterized by having a total pore volume of at least 0.4 ml/g, the volume of pores having a diameter of 10 to 100 nm being 0.25 ml/g or more, the volume of pores having a diameter of 100 nm to 10 µm being 0.2 ml/g or less (particularly see claim 1).

Patent Document 4 discloses a zirconia-based porous body having (1) a peak in a pore diameter of 20 to 100 nm in a pore distribution based on the BJH method, a P/W ratio of 0.05 or more, in which W represents a half width of a peak obtained in a measured pore distribution curve and P represents a height of the peak, and a total pore volume of 0.5 cm³/g or more; and (2) a peak in a pore diameter of 20 to 100 nm, the P/W ratio of 0.03 or more, a specific surface area of at least 40 m²/g, and a total pore volume of 0.3 cm³/g or more, after heat treatment at 1000°C for 12 hours (particularly see claim 1).

Patent Document 5 discloses a mixed oxide of zirconium, of cerium, of lanthanum and optionally of at least one rare earth metal other than cerium and lanthanum (REM), the proportions by weight are between 8% and 45% of cerium; between 1% and 10% of lanthanum; between 0% and 15% of the rare earth metal other than cerium and lanthanum; the remainder as zirconium,
characterized in that the mixed oxide exhibits: after calcination at a temperature of 1100°C for 4 hours, a BET specific surface area of at least 30 m²/g; after calcination at a temperature of 1000°C for 4 hours, a BET specific surface area of at least 55 m²/g; and characterized in that the derivative curve (dV/dlog D) obtained by mercury porosimetry on the mixed oxide after calcination at a temperature of 1100°C for 4 hours exhibits, in the range of the pores with a diameter of less than or equal to 200 nm, a peak for which the maximum value corresponds to a pore diameter, denoted D_{p,1100°C/ 4h}, of between 24 and 34 nm, V and D respectively denoting the pore volume and the pore diameter (particularly see claim 1). In addition, Patent Document 5 discloses that the ratio defined by R = V₁/V₂ in which: V₁ is the pore volume developed by the pores for which the diameter in nm is between (D_{p,1100°C/4h}-15) and (D_{p,1100°C/4h}+15); V₂ is the pore volume developed by the pores for which the diameter is less than or equal to 200 nm; V₁ and V₂ are determined by mercury porosimetry on the mixed oxide after calcination at 1100°C for 4 h; is greater than or equal to 0.60 (particularly see claim 7).

### PRIOR ART DOCUMENT

### PATENT DOCUMENTS

Patent Document 1: JP-A-2006-036576
Patent Document 2: JP-A-2008-081392
Patent Document 3: JP-A-2009-249275
Patent Document 4: JP-A-2015-189655
Patent Document 5: JP-A-2019-521937

### SUMMARY OF THE INVENTION

### PROBLEMS TO BE SOLVED BY THE INVENTION

The present inventor has intensively studied zirconia-based composite oxides. As a result, it has been found that, in a zirconia-based composite oxide serving as a catalyst carrier for exhaust gas purification, the volume of mesopores (diameter: 2 to 50 nm) is conventionally increased in order to improve the heat resistance of specific surface area, but when the volume of mesopores of the zirconia-based composite oxide is increased, the volume of macropores (50 nm or more) is also increased. Here, in the present description, the term "heat resistance of specific surface area" means that a decrease in specific surface area due to heating is small.

Among the macropores, macropores having a diameter of 100 nm or more do not contribute to improvement of the heat resistance of specific surface area. Therefore, there is a problem that such macropores contribute a little also to improvement of functions as a catalyst carrier.

Furthermore, as a result of intensive studies, the present inventor has found that it is important in order to improve the heat resistance of specific surface area that there is a sharp peak in the mesopore region and the pore volume in the mesopore region is large.

The present invention has been devised in view of the above-described problems, and an object of the present invention is to provide a porous zirconia-based composite oxide in which a decrease in specific surface area due to heating is small. Another object of the present invention is to provide a method for manufacturing the porous zirconia-based composite oxide.

### MEANS FOR SOLVING THE PROBLEMS

The present invention provides the following.
[1] A porous zirconia-based composite oxide satisfying all of following (1) to (3) below in a range of 2 nm or more and 200 nm or less in a pore distribution based on a BJH method, and
   having a pore volume of 0.01 cm³/g or more and 0.25 cm³/g or less in a range of more than 100 nm and 1000 nm or less in a pore distribution based on a mercury intrusion method,
   (1) a dV/dlogD peak is in a range of 2 nm or more and 100 nm or less;
   (2) a maximum value of the dV/dlogD peak is 1.5 or more and 5.0 or less;
   (3) a pore volume in a range of 2 nm or more and 100 nm or less is 0.30 cm³/g or more and 1.50 cm³/g or less.

According to the configuration of [1], since the dV/dlogD peak is in the range of 2 nm or more and 100 nm or less, the maximum value of the dV/dlogD peak is 1.5 or more, and the pore volume in the range of 2 nm or more and 100 nm or less is 0.30 cm³/g or more, it can be said that there is a sharp peak in the range of 2 nm or more and 100 nm or less contributing to the heat resistance of specific surface area, and the pore volume is large.

In addition, since the pore volume in the range of more than 100 nm and 1000 nm or less is 0.25 cm³/g or less, it can be said that there are few pores that do not contribute to the heat resistance of specific surface area.

As described above, according to the configuration of [1], it can be said that the decrease in specific surface area due to heating is small.

In addition, macropores may cause a decrease in performance because the supported noble metal is buried in the inside of the particle due to aggregation of the material at a high temperature, and is not effectively employed for purification reactions. In addition, an increase in the number of macropores leads to an increase in water absorbability, and causes deterioration in handling during adjustment of a catalyst slurry.

On the other hand, according to the configuration of [1], since the pore volume in the range of 100 nm or more and 1000 nm or less is 0.25 cm³/g or less, the amount of noble metal buried in the particle is small even when heated at a high temperature. Therefore, deterioration in performance when heated at a high temperature is inhibited. In addition, since the pore volume in the range of more than 100 nm and 1000 nm or less is 0.25 cm³/g or less, water absorbability is low, and handling during adjustment of a catalyst slurry is good.

From the viewpoint of measurement accuracy, a decision has been made to use a value obtained by the BJH method is used for pores in the range of 2 nm or more and 100 nm or less and a value obtained by the mercury intrusion method for pores in the range of more than 100 nm and 1000 nm or less.

Specifically, the reason why a value obtained using the BJH method is used for pores in the range of 2 nm or more and 100 nm or less is that the BJH method is superior in accuracy of measurement of pores in the range of 2 nm or more and 200 nm or less because the BJH method is pore measurement by gas adsorption, but analysis by the gas adsorption method cannot be appropriately performed for the range of more than 200 nm.

The reason why a value obtained using the mercury intrusion method is used for pores in the range of more than 100 nm and 1000 nm or less is that measurement in the region of 200 nm or more cannot be appropriately performed by the gas adsorption method.

Note that none of Patent Documents 1 to 5 discloses that there is a sharp dV/dlogD peak with a maximum value of the peak being 1.5 or more in the range of 2 nm or more and 100 nm or less, and the pore volume of macropores of 100 nm or more is small. Therefore, zirconia-based composite oxides such as those disclosed in Patent Document 1 to 5 have less effect of inhibiting the decrease in specific surface area due to heating as compared with that of the configuration of [1].

In particular, Patent Document 5 discloses that in the graph of the derivative curve (dV/dlogD) obtained by mercury porosimetry after heat treatment at a temperature of 1100°C for 4 hours, the pore volume of macropores of 100 nm or more is relatively small. In general, however, macropores are easily reduced by heat treatment. That is, it cannot be said that Patent Document 5 discloses that the pore volume of macropores of 100 nm or more is small in the state before the heat treatment. The configuration of [1] is characterized in that the pore volume in the range of more than 100 nm and 1000 nm or less is 0.25 cm³/g or less in the state before heat treatment, and such a configuration is not disclosed in Patent Document 5.

[2] The porous zirconia-based composite oxide with the configuration of [1],
in which the porous zirconia-based composite oxide satisfies all of the following (4) to (6) in a range of 2 nm or more and 200 nm or less in a pore distribution based on the BJH method after heat treatment at 1000°C for 3 hours under atmospheric pressure (0.1013 MPa) in the air atmosphere, and
has a pore volume of 0.01 cm³/g or more and 0.20 cm³/g or less in a range of more than 100 nm and 1000 nm or less in a pore distribution based on the mercury intrusion method after heat treatment at 1000°C for 3 hours under atmospheric pressure (0.1013 MPa) in the air atmosphere,
(4) a dV/dlogD peak is in a range of 2 nm or more and 100 nm or less;
(5) a maximum value of the dV/dlogD peak is 1.0 or more and 4.0 or less;
(6) a pore volume in a range of 2 nm or more and 100 nm or less is 0.25 cm³/g or more and 1.00 cm³/g or less.

When the dV/dlogD peak after heat treatment at 1000°C for 3 hours is in the range of 2 nm or more and 100 nm or less, the maximum value of the dV/dlogD peak is 1.0 or more, and the pore volume in the range of 2 nm or more and 100 nm or less is 0.25 cm³/g or more, it can be said that there is a sharp peak in the range of 2 nm or more and 100 nm or less contributing to the heat resistance of specific surface area, and the pore volume is large even after performing heat treatment at 1000°C for 3 hours.

In addition, when the pore volume in the range of more than 100 nm and 1000 nm or less after heat treatment at 1000°C for 3 hours is 0.20 cm³/g or less, it can be said that there are few pores that do not contribute to the heat resistance of specific surface area.

As described above, according to the configuration of [2], it can be said that a further reduced decrease in specific surface area is caused by heating.

In addition, a similar effect is expected also in an oxidizing atmosphere and a reducing atmosphere under which the composite oxide is actually used as a catalyst.

[3] The porous zirconia-based composite oxide with the configuration of [1] or [2],
in which the porous zirconia-based composite oxide has a specific surface area of 40 m²/g or more and 100 m²/g or less after heat treatment at 1000°C for 3 hours under atmospheric pressure in the air atmosphere (0.1013 MPa).

When the specific surface area is 40 m²/g or more after heat treatment at 1000°C for 3 hours, it can be said that a further reduced decrease in specific surface area is caused by heating.

[4] The porous zirconia-based composite oxide with the configuration of [1] to [3],
in which the porous zirconia-based composite oxide has a specific surface area (initial specific surface area) of 45 m²/g or more and 150 m²/g or less.

When the specific surface area before the heat treatment is 45 m²/g or more, the specific surface area after heating can be maintained high even if the specific surface area is somewhat reduced by heating.

[5] A method for manufacturing the porous zirconia-based composite oxide according to [1] to [4], the method including:
a first step of heating a zirconium salt solution under a condition of 100°C or more and 150°C or less to partially form hydrated zirconia; and
a second step of adding a sulfating agent after the first step to obtain a basic zirconium sulfate-containing slurry.

According to the configuration of [5], first, the zirconium salt solution is heated under the condition of 100°C or more and 150°C or less to form hydrated zirconia (first step), and then the sulfating agent is added (second step), thereby affording particles (basic zirconium sulfate-containing slurry) having many mesopores and few macropores.

As the formation of basic zirconium sulfate proceeds with hydrated zirconia as a nucleus, particles having few macropores and many mesopores are formed.

Owing to the configuration of [5] as described above, it is possible to produce a porous zirconia-based composite oxide in which the pore diameter distribution in the mesopore region is sharp, the pore volume of pores having a diameter of 10 nm or more and 100 nm or less is large, and the pore volume of pores having a diameter of 100 nm or more and 1000 nm or less is small.

### EFFECT OF THE INVENTION

According to the present invention, it is possible to provide a porous zirconia-based composite oxide that exhibits a small decrease in specific surface area due to heating. In addition, the present invention can provide a method for manufacturing the porous zirconia-based composite oxide.

### BRIEF DESCRIPTION OF THE DRAWINGS

Fig. 1 is a diagram showing the pore distribution based on the BJH method of the porous zirconia-based composite oxide of Example 1.
Fig. 2 is a diagram showing the pore distribution based on the BJH method of the porous zirconia-based composite oxide of Example 2.
Fig. 3 is a diagram showing the pore distribution based on the BJH method of the porous zirconia-based composite oxide of Example 3.
Fig. 4 is a diagram showing the pore distribution based on the BJH method of the porous zirconia-based composite oxide of Example 4.
Fig. 5 is a diagram showing the pore distribution based on the BJH method of the porous zirconia-based composite oxide of Example 5.
Fig. 6 is a diagram showing the pore distribution based on the BJH method of the porous zirconia-based composite oxide of Example 6.
Fig. 7 is a diagram showing the pore distribution based on the BJH method of the porous zirconia-based composite oxide of Comparative Example 1.
Fig. 8 is a diagram showing the pore distribution based on the BJH method of the porous zirconia-based composite oxide of Comparative Example 2.
Fig. 9 is a diagram showing the pore distribution based on the BJH method of the porous zirconia-based composite oxide of Comparative Example 3.
Fig. 10 is a diagram showing the pore distribution based on the BJH method of the porous zirconia-based composite oxide of Comparative Example 4.
Fig. 11 is a diagram showing the pore distribution based on the mercury intrusion method of the porous zirconia-based composite oxide of Example 1.
Fig. 12 is a diagram showing the pore distribution based on the mercury intrusion method of the porous zirconia-based composite oxide of Example 2.
Fig. 13 is a diagram showing the pore distribution based on the mercury intrusion method of the porous zirconia-based composite oxide of Example 3.
Fig. 14 is a diagram showing the pore distribution based on the mercury intrusion method of the porous zirconia-based composite oxide of Example 4.
Fig. 15 is a diagram showing the pore distribution based on the mercury intrusion method of the porous zirconia-based composite oxide of Example 5.
Fig. 16 is a diagram showing the pore distribution based on the mercury intrusion method of the porous zirconia-based composite oxide of Example 6.
Fig. 17 is a diagram showing the pore distribution based on the mercury intrusion method of the porous zirconia-based composite oxide of Comparative Example 1.
Fig. 18 is a diagram showing the pore distribution based on the mercury intrusion method of the porous zirconia-based composite oxide of Comparative Example 2.
Fig. 19 is a diagram showing the pore distribution based on the mercury intrusion method of the porous zirconia-based composite oxide of Comparative Example 3.
Fig. 20 is a diagram showing the pore distribution based on the mercury intrusion method of the porous zirconia-based composite oxide of Comparative Example 4.

### MODE FOR CARRYING OUT THE INVENTION

Hereinafter, embodiments of the present invention will be described. However, the present invention is not limited only to these embodiments. The porous zirconia-based composite oxide referred to herein is a common porous zirconia-based composite oxide and contains 10% by mass or less of impurity metal compounds including hafnium. The terms "comprise" and "contain" herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

### [Porous zirconia-based composite oxide]

A porous zirconia-based composite oxide according to the present embodiment will be described in detail later, but the zirconia-based composite oxide contains zirconia as an essential component, and is a composite oxide with an oxide other than zirconia (other metal oxide). The application of the porous zirconia-based composite oxide according to the present embodiment is not particularly limited, but the porous zirconia-based composite oxide is useful as a catalyst carrier for exhaust gas purification. When the zirconia-based composite oxide is used as the catalyst carrier for exhaust gas purification, examples of a catalyst which can be supported include a noble metal catalyst.

### <Pore volume before heat treatment>

The porous zirconia-based composite oxide according to the present embodiment satisfies all of the following (1) to (3) in a range of 2 nm or more and 200 nm or less in a pore distribution based on a BJH method, and
has a pore volume of 0.01 cm³/g or more and 0.25 cm³/g or less in a range of more than 100 nm and 1000 nm or less in a pore distribution based on a mercury intrusion method,
(1) a dV/dlogD peak is in a range of 2 nm or more and 100 nm or less;
(2) a maximum value of the dV/dlogD peak is 1.5 or more and 5.0 or less;
(3) a pore volume in a range of 2 nm or more and 100 nm or less is 0.30 cm³/g or more and 1.50 cm³/g or less.

In the porous zirconia-based composite oxide, since the dV/dlogD peak is in the range of 2 nm or more and 100 nm or less, the maximum value of the dV/dlogD peak is 1.5 or more, and the pore volume in the range of 2 nm or more and 100 nm or less is 0.30 cm³/g or more, it can be said that there is a sharp peak in the range of 2 nm or more and 100 nm or less contributing to the heat resistance of specific surface area, and the pore volume is large.

In addition, since the pore volume in the range of more than 100 nm and 1000 nm or less is 0.25 cm³/g or less, it can be said that there are few pores that do not contribute to the heat resistance of specific surface area.

From the above, it can be said that the decrease in specific surface area due to heating is small with the porous zirconia-based composite oxide.

In addition, macropores may cause a decrease in performance because the supported noble metal is buried in the inside of the particle due to aggregation of the material at a high temperature, and is not effectively employed for purification reactions. In addition, an increase in the number of macropores leads to an increase in water absorbability, and causes deterioration in handling during adjustment of a catalyst slurry.

On the other hand, with the porous zirconia-based composite oxide, since the pore volume in the range of 100 nm or more and 1000 nm or less is 0.25 cm³/g or less, the amount of noble metal buried in the particle is small even when heated at a high temperature. Therefore, deterioration in performance when heated at a high temperature is inhibited. In addition, since the pore volume in the range of more than 100 nm and 1000 nm or less is 0.25 cm³/g or less, water absorbability is low, and handling during adjustment of a catalyst slurry is good.

The dV/dlogD peak in the above (1) is preferably in a range of 5 nm or more and 95 nm or less, and more preferably in a range of 10 nm or more and 80 nm or less.

The maximum value of the dV/dlogD peak in the above (2) is preferably 1.7 or more, and more preferably 2.0 or more. The maximum value of the dV/dlogD peak is preferably as large as possible, but is, for example, 4.0 or less, 4.5 or less, or the like.

The pore volume in the range of 2 nm or more and 100 nm or less in the above (3) is preferably 0.35 cm³/g or more, and more preferably 0.40 cm³/g or more. The pore volume in the range of 2 nm or more and 100 nm or less is preferably as large as possible, but is, for example, 1.30 cm³/g or less, 1.40 cm³/g or less, or the like.

The pore volume in the range of more than 100 nm and 1000 nm or less is preferably 0.22 cm³/g or less, and more preferably 0.20 cm³/g or less. The pore volume in the range of more than 100 nm and 1000 nm or less is preferably as small as possible, but is, for example, 0.02 cm³/g or more, 0.05 cm³/g or more, or the like.

The method for satisfying all of the above (1) to (3) and adjusting the pore volume in the range of more than 100 nm and 1000 nm or less to the range of 0.01 cm³/g or more and 0.25 cm³/g or less is not particularly limited, and examples thereof include a method of performing the adjustment by the manufacturing method described later.

In the porous zirconia-based composite oxide, the pore volume in the entire measurement range (0.0036 um or more and 10.3 um or less) in the pore distribution based on the mercury intrusion method is preferably 0.50 cm³/g or more and 2.50 cm³/g or less. When the pore volume in the entire measurement range (0.0036 um or more and 10.3 um or less) in the pore distribution based on the mercury intrusion method is 0.70 cm³/g or more, the porous zirconia-based composite oxide is more superior in performance as a catalyst carrier.

The pore volume in the entire measurement range (0.0036 um or more and 10.3 um or less) is preferably 0.70 cm³/g or more, and more preferably 1.00 cm³/g or more. The pore volume in the entire measurement range (0.0036 um or more and 10.3 um or less) is preferably as large as possible, but is, for example, 2.00 cm³/g or less, 2.30 cm³/g or less, or the like.

### <Pore volume after heat treatment at 1000°C for 3 hours>

The porous zirconia-based composite oxide described above preferably satisfies all of the following (4) to (6) in a range of 2 nm or more and 200 nm or less in a pore distribution based on the BJH method after heat treatment at 1000°C for 3 hours under atmospheric pressure in an air atmosphere, and
has a pore volume of 0.01 cm³/g or more and 0.20 cm³/g or less in a range of more than 100 nm and 1000 nm or less in a pore distribution based on the mercury intrusion method after heat treatment at 1000°C for 3 hours under atmospheric pressure in the air atmosphere,
(4) a dV/dlogD peak is in a range of 2 nm or more and 100 nm or less;
(5) a maximum value of the dV/dlogD peak is 1.0 or more and 4.0 or less;
(6) a pore volume in a range of 2 nm or more and 100 nm or less is 0.25 cm³/g or more and 1.00 cm³/g or less.

When the dV/dlogD peak after heat treatment at 1000°C for 3 hours is in the range of 2 nm or more and 100 nm or less, the maximum value of the dV/dlogD peak is 1.0 or more, and the pore volume in the range of 2 nm or more and 100 nm or less is 0.25 cm³/g or more, it can be said that there is a sharp peak in the range of 2 nm or more and 100 nm or less contributing to the heat resistance of specific surface area, and the pore volume is large even after performing heat treatment at 1000°C for 3 hours.

In addition, when the pore volume in the range of more than 100 nm and 1000 nm or less after heat treatment at 1000°C for 3 hours is 0.20 cm³/g or less, it can be said that there are few pores that do not contribute to the heat resistance of specific surface area.

From the above, when all of the above (4) to (6) are satisfied and the pore volume in the range of more than 100 nm and 1000 nm or less after heat treatment at 1000°C for 3 hours is 0.20 cm³/g or less, it can be said that a further reduced decrease in specific surface area is caused by heating.

The dV/dlogD peak after the heat treatment at 1000°C for 3 hours in the above (4) is preferably in the range of 5 nm or more and 95 nm or less, and more preferably in the range of 10 nm or more and 90 nm or less.

The maximum value of the dV/dlogD peak after the heat treatment at 1000°C for 3 hours in the above (5) is preferably 1.2 or more, and more preferably 1.4 or more. The maximum value of the dV/dlogD peak is preferably as large as possible, but is, for example, 3.3 or less, 3.5 or less, or the like.

The pore volume in the range of 2 nm or more and 100 nm or less after the heat treatment at 1000°C for 3 hours in the above (6) is preferably 0.27 cm³/g or more, and more preferably 0.30 cm³/g or more. The pore volume in the range of 2 nm or more and 100 nm or less is preferably as large as possible, but is, for example, 0.90 cm³/g or less, 0.95 cm³/g or less, or the like.

The pore volume in the range of more than 100 nm and 1000 nm or less after the heat treatment at 1000°C for 3 hours is preferably 0.19 cm³/g or less, and more preferably 0.18 cm³/g or less. The pore volume in the range of more than 100 nm and 1000 nm or less is preferably as small as possible, but is, for example, 0.02 cm³/g or more, 0.05 cm³/g or more, or the like.

The method for satisfying all of the above (4) to (6) and adjusting the pore volume in the range of more than 100 nm and 1000 nm or less after heat treatment at 1000°C for 3 hours to the range of 0.01 cm³/g or more and 0.20 cm³/g or less is not particularly limited, and examples thereof include a method of performing the adjustment by the manufacturing method described later.

In the porous zirconia-based composite oxide, the pore volume in the entire measurement range (0.0036 um or more and 10.3 um or less) in the pore distribution based on the mercury intrusion method after heat treatment at 1000°C for 3 hours is preferably 0.50 cm³/g or more and 2.00 cm³/g or less. When the pore volume in the entire measurement range (0.0036 um or more and 10.3 um or less) in the pore distribution based on the mercury intrusion method after heat treatment at 1000°C for 3 hours is 0.50 cm³/g or more, the porous zirconia-based composite oxide is more superior in performance as a catalyst carrier.

The pore volume in the entire measurement range (0.0036 um or more and 10.3 um or less) after heat treatment at 1000°C for 3 hours is preferably 0.60 cm³/g or more, and more preferably 0.70 cm³/g or more. The pore volume in the entire measurement range (0.0036 um or more and 10.3 um or less) after heat treatment at 1000°C for 3 hours is preferably as large as possible, but is, for example, 1.80 cm³/g or less, 1.90 cm³/g or less, or the like.

The details of the methods of measuring the pore distribution based on the BJH method and the pore distribution based on the mercury intrusion method are according to the method described in Examples.

### <Specific surface area after heat treatment at 1000°C for 3 hours under atmospheric pressure in air atmosphere>

The porous zirconia-based composite oxide preferably has a specific surface area after heat treatment at 1000°C for 3 hours under atmospheric pressure in the air atmosphere of 45 m²/g or more and 100 m²/g or less. When the specific surface area after heat treatment at 1000°C for 3 hours under atmospheric pressure in the air atmosphere is 45 m²/g or more, it can be said that a further reduced decrease in specific surface area is caused by heating.

The specific surface area after heat treatment at 1000°C for 3 hours is preferably 48 m²/g or more, more preferably 50 m²/g or more, and still more preferably 55 m²/g or more.

The specific surface area after the heat treatment at 1000°C for 3 hours is preferably as large as possible, but is, for example, 90 m²/g or less, 95 m²/g or less, or the like.

The specific surface area after the heat treatment at 1000°C for 3 hours is generally not larger than the specific surface area before the heat treatment, and if the heat resistance is high, the specific surface area is only equal to or slightly lower than that before the heat treatment.

### <Specific surface area after heat treatment at 1100°C for 3 hours under atmospheric pressure in air atmosphere>

The porous zirconia-based composite oxide preferably has a specific surface area of 15 m²/g or more and 70 m²/g or less after heat treatment at 1100°C for 3 hours under atmospheric pressure in the air atmosphere. When the specific surface area after heat treatment at 1100°C for 3 hours under atmospheric pressure in the air atmosphere is 15 m²/g or more, it can be said that a further reduced decrease in specific surface area is caused by heating.

The specific surface area after the heat treatment at 1100°C for 3 hours is generally lower than that before the heat treatment or after heat treatment at 1000°C for 3 hours.

The specific surface area after the heat treatment at 1100°C for 3 hours is preferably 18 m²/g or more, more preferably 20 m²/g or more, and still more preferably 22 m²/g or more.

The specific surface area after the heat treatment at 1100°C for 3 hours is preferably as large as possible, but is, for example, 60 m²/g or less, 65 m²/g or less, or the like.

### <Specific surface area (initial specific surface area)>

The porous zirconia-based composite oxide preferably has a specific surface area (initial specific surface area) of 45 m²/g or more and 150 m²/g or less. When the specific surface area is 45 m²/g or more, the specific surface area after heating can be maintained high even if the specific surface area is somewhat reduced by heating. Here, the specific surface area (initial specific surface area) refers to a specific surface area in a state where heat treatment or pulverization treatment or the like is not performed after the porous zirconia-based composite oxide is manufactured.

The specific surface area is preferably 47 m²/g or more, more preferably 50 m²/g or more, still more preferably 52 m²/g or more.

The specific surface area is preferably as large as possible, but is, for example, 140 m²/g or less, 145 m²/g or less, or the like.

The specific surface area after the heat treatment at 1000°C for 3 hours, the specific surface area after the heat treatment at 1100°C for 3 hours, and the specific surface area (initial specific surface area) refer to values obtained by the methods described in Examples.

### <Particle diameter>

The particle diameter D₅₀ of the porous zirconia-based composite oxide is preferably 1.0 um or more and 30.0 um or less. The particle diameter D₅₀ is more preferably 1.5 um or more, and still more preferably 2.0 um or more. The particle diameter D₅₀ is more preferably 29.0 um or less, and still more preferably 28.0 um or less.

When the particle diameter D₅₀ is 1.0 um or more and 30.0 um or less, the porous zirconia-based composite oxide can be suitably used as a catalyst carrier.

The particle diameter D₁₀ of the porous zirconia-based composite oxide is preferably 0.5 um or more and 10.0 um or less. The particle diameter D₁₀ is more preferably 0.6 um or more, and still more preferably 0.7 um or more. The particle diameter D₁₀ is more preferably 9.5 um or less, and still more preferably 9.0 um or less.

When the particle diameter D₁₀ is 0.5 um or more and 10.0 um or less, the porous zirconia-based composite oxide can be suitably used as a catalyst carrier.

The particle diameter D₉₀ of the porous zirconia-based composite oxide is preferably 5.0 um or more and 100.0 um or less. The particle diameter D₉₀ is more preferably 7.0 um or more, and still more preferably 10.0 um or more. The particle diameter D₉₀ is more preferably 90.0 um or less, and still more preferably 80.0 um or less.

When the particle diameter D₉₀ is 5.0 um or more and 100.0 um or less, the porous zirconia-based composite oxide can be suitably used as a catalyst carrier.

The particle diameter D₁₀, the particle diameter D₅₀, and the particle diameter D₉₀ refer to particle diameters in a state where the porous zirconia-based composite oxide has been manufactured, and has then not been pulverized or heat-treated. The above "pulverizing" refers to finely pulverizing, and pulverizing due to a general technique such as a planetary mill, a ball mill, or a jet mill.

The particle diameter D₁₀, the particle diameter D₅₀, and the particle diameter D₉₀ refer to values obtained by the methods described in Examples.

### <Composition>

The porous zirconia-based composite oxide contains zirconia. The content of the zirconia is preferably 30% by mass or more, more preferably 35% by mass or more, still more preferably 40% by mass or more, and particularly preferably 45% by mass or more, based on 100 mass% of the entire porous zirconia-based composite oxide. The upper limit of the content of the zirconia is not particularly limited, but the content of the zirconia is preferably 95% by mass or less, more preferably 92% by mass or less, still more preferably 90% by mass or less, and particularly preferably 85% by mass or less. When the content of the zirconia is 30% by mass or more and 95% by mass or less, the porous zirconia-based composite oxide can be suitably used as a catalyst carrier.

The porous zirconia-based composite oxide preferably contains oxides of one or more selected from rare earth elements.

The rare earth elements refer to Sc, Y, La, Ce, Pr, Nd, Pm, Sm, Eu, Gd, Tb, Dy, Ho, Er, Tm, Yb, and Lu. However, it is preferable that the porous zirconia-based composite oxide does not contain Pm. That is, it is more preferable that the porous zirconia-based composite oxide contains oxides of one or more selected from rare earth elements other than Pm.

When the zirconia-based composite oxide contains the oxides of one or more selected from rare earth elements other than Pm, the thermal stability of the specific surface area can be improved. That is, the amount of a change in the specific surface area can be reduced before and after being exposed to a high temperature, and as a result, the catalytic performance can be prevented from being significantly reduced.

Among the rare earth elements, Y (yttrium), La (lanthanum), Ce (cerium), Nd (neodymium), and Pr (praseodymium) are preferable. That is, the porous zirconia-based composite oxide preferably contains one or more oxides selected from the group consisting of lanthanum oxide, cerium oxide, neodymium oxide, praseodymium oxide, and yttrium oxide.

The porous zirconia-based composite oxide may contain, in addition to zirconia and the oxides of the rare earth elements described above, oxides of one or more elements selected from the group consisting of:
A) oxides of one or more elements selected from the group consisting of Al, In, Si, Sn, Bi, P, and Zn;
B) transition metal oxides (excluding oxides of rare earth elements and noble metal elements);
C) alkaline earth metal oxides; and
D) the platinum family.

Hereinafter, the elements shown in A) to D) are referred to as "other elements". When the porous zirconia-based composite oxide contains oxides of the other elements, the content of the oxides of the other elements may be 0.1% by mass or more in terms of oxide based on 100% by mass of the entire porous zirconia-based composite oxide. The upper limit of the content of the oxides of the other elements is not particularly limited, but the content may be 20% by mass or less, 10% by mass or less, 7% by mass or less, 5% by mass or less, or the like.

Examples of the transition metal include Ti, V, Cr, Mn, Fe, Co, Ni, Cu, Nb, Mo, Ta, W, and Ag. Examples of the alkaline earth metal include Mg, Ca, Sr, and Ba. Examples of the platinum family include Rh, Pd, Pt, and Ir.

In the porous zirconia-based composite oxide, the total content of zirconia and a rare earth oxide is preferably 80% by mass or more and 100% by mass or less. The total content of zirconia and the rare earth oxide is more preferably 85% by mass or more, and still more preferably 90% by mass or more. The total content of zirconia and the rare earth oxide is more preferably 99% by mass or less, and still more preferably 98% by mass or less.

Preferable composition ratios of the porous zirconia-based composite oxide include combinations not exceeding 100% in total given as examples in the following (1) to (4).
(1) Zirconia; 40% by mass or more and 95% by mass or less
   Rare earth oxide; 5% by mass or more and 60% by mass or less
   Oxides of other elements; 0% by mass or more and 20% by mass or less
(2) Zirconia; 43% by mass or more and 90% by mass or less
   Rare earth oxide; 10% by mass or more and 55% by mass or less
   Oxides of other elements; 1% by mass or more and 15% by mass or less
(3) Zirconia; 45% by mass or more and 75% by mass or less
   Rare earth oxide; 15% by mass or more and 50% by mass or less
   Oxides of other elements; 1% by mass or more and 10% by mass or less
(4) Zirconia; 50% by mass or more and 70% by mass or less
   Rare earth oxide; 16% by mass or more and 45% by mass or less
   Oxides of other elements; 1% by mass or more and 5% by mass or less

The composition of the porous zirconia-based composite oxide is specified by the method described in Examples.

### [Method for manufacturing porous zirconia-based composite oxide]

Hereinafter, one example of the method for manufacturing a porous zirconia-based composite oxide will be described. However, the method for manufacturing a porous zirconia-based composite oxide of the present invention is not limited to the following exemplification.

The method for manufacturing the porous zirconia-based composite oxide according to the present embodiment comprises:
a first step of heating a zirconium salt solution under a condition of 100°C or more and 150°C or less to partially form hydrated zirconia; and
a second step of adding a sulfating agent after the first step to obtain a basic zirconium sulfate-containing slurry A.

In the method for manufacturing a porous zirconia-based composite oxide according to the present embodiment, first, a zirconium salt solution is heated and hydrolyzed under the condition of 100°C or more and 150°C or less to form hydrated zirconia (first step). Thereafter (after the first step), a sulfating agent is added to afford a basic zirconium sulfate-containing slurry (second step).

By heating and hydrolyzing a zirconium salt solution under the condition of 100°C or more and 150°C or less to form hydrated zirconia, and then adding a sulfating agent is added, particles (basic zirconium sulfate-containing slurry) having few mesopores and few macropores can be obtained.

The heating temperature in the above process is preferably 105°C or more, and more preferably 110°C or more. The heating temperature in the above process is preferably 145°C or less, and more preferably 140°C or less.

The heating time is preferably 20 minutes or more and 10 hours or less. The heating time is more preferably 30 minutes or more, and still more preferably 40 minutes or more. The heating time is more preferably 9 hours or less, and still more preferably 8 hours or less. Setting the mixing time within the above range of time makes it possible to well mature the basic zirconium sulfate formed. The basic zirconium sulfate is not limited, and examples thereof include hydrates of compounds such as ZrOSO_{4•}ZrO₂, 5ZrO_{2•}3SO₃, and 7ZrO_{2•}3SO₃. The basic zirconium sulfate may be one or a mixture of two or more thereof.

The heating and mixing may be performed either under atmospheric pressure or under pressure. When the heating and mixing are performed under pressure, the pressure is not particularly limited, but is preferably 0.10 MPa or more, more preferably 0.11 MPa or more in terms of absolute pressure. The pressure is not particularly limited, but is preferably 0.8 MPa or less, 0.6 MPa or less, or 0.55 MPa.

After the mixing, the reaction solution is preferably cooled to 60°C or less.

The cooling is preferably performed to 50°C or lower, and more preferably 40°C or lower. The lower limit temperature for the cooling is not particularly limited, but is preferably about a temperature at which the reaction solution is not frozen, and examples thereof include 10°C or higher and 20°C or higher. The cooling rate does not need to be particularly controlled, and may be natural cooling. However, when the scale is large, it takes time to perform natural cooling, whereby the cooling may be performed using a heat exchanger or the like. In this case, the cooling rate may be appropriately set within a range of, for example, 0.1°C/min or more and 20°C/min or less.

The sulfating agent is not limited as long as the sulfating agent reacts with zirconium ions to form a sulfate (that is, a sulfating reagent), and examples thereof include sodium sulfate, potassium sulfate, and ammonium sulfate. The sulfating agent may be in any form such as a powder or solution form, but a solution (particularly, an aqueous solution) is preferable. The concentration of the solution to be used can be appropriately set.

The free acid concentration of the mixed solution is preferably set to 0.2 to 2.2 N (normal). Examples of the free acid include sulfuric acid, nitric acid, and hydrochloric acid. The type of the free acid is not limited, but hydrochloric acid is preferable in terms of its high productivity on an industrial scale.

The zirconium salt is only required to supply zirconium ions, and for example, zirconium oxynitrate, zirconium oxychloride, and zirconium nitrate and the like can be used. These may be used singly or in combination of two or more of them.

A solvent for forming the zirconium salt solution may be selected according to the type of the zirconium salt. Usually, water (pure water or ion-exchanged water) is preferable.

The concentration of the zirconium salt solution is not particularly limited, but generally, 5 to 250 g (particularly, 20 to 150 g) of zirconium oxide (ZrO₂) is desirably contained in 1000 g of the solvent.

By adjusting the amount of the sulfating agent to be added, the size or the pore volume of mesopores can be adjusted to fall within suitable ranges.

The size of mesopores tends to increase, and the pore volume tends to increase as the amount of the sulfating agent to be added is increased.

The sulfating agent to be added is preferably added such that the weight ratio of sulfate radical (SO₄²⁻) to ZrO₂ is 0.3 or more and 0.7 or less.

Then, when the porous zirconia-based composite oxide contains oxides of one or more selected from the group consisting of rare earth elements and other elements, salt solutions or compounds of one or two or more metals selected from the group consisting of rare earth elements and other elements are added in predetermined amounts to the basic zirconium sulfate-containing slurry before a neutralization step to be described later.

The step described above is preferably performed in an autoclave in which the temperature and the pressure are easily managed.

Next, zirconium hydroxide is formed by neutralizing the basic zirconium sulfate. Specifically, zirconium hydroxide is formed by neutralizing the basic zirconium sulfate with an alkali. The alkali is not limited, and for example, ammonium hydroxide, ammonium bicarbonate, sodium hydroxide, and potassium hydroxide and the like can be used. Among these, sodium hydroxide is preferable from the viewpoint of industrial cost.

The amount of the alkali added is not particularly limited as long as zirconium hydroxide can be formed as a precipitate from a basic zirconium sulfate solution. Usually, the alkali is added such that the pH of the solution is 11 or more, and preferably 12 or more.

After the neutralization reaction, the zirconium hydroxide-containing solution is preferably held at 35 to 60°C for 1 hour or more. As a result, the precipitate formed is aged and is rendered easy to be collected by filtration.

Next, the zirconium hydroxide is collected by a solid-liquid separation method. For example, filtration, centrifugation, and decantation and the like can be used.

After the zirconium hydroxide is collected, the zirconium hydroxide is preferably washed with water to remove impurities adhering.

The zirconium hydroxide may be dried by natural drying or heat drying.

Next, the zirconium hydroxide is subjected to heat treatment (fired) to obtain a porous zirconia-based composite oxide. The heat treatment temperature is not particularly limited, but the zirconium hydroxide is preferably subjected to heat treatment at about 400 to 900°C for about 1 to 5 hours. The heat treatment atmosphere is preferably air or an oxidizing atmosphere.

The obtained porous zirconia-based composite oxide may be subjected to treatment for disaggregating for the purpose of improving handleability, if necessary.

The method for manufacturing the porous zirconia-based composite oxide according to the present embodiment has been described above.

### EXAMPLES

Hereinafter, the present invention will be described in detail with reference to Examples, but the present invention is not limited to the following Examples, and other examples are possible as long as they do not depart from the gist of the present invention. The porous zirconia-based composite oxides obtained in Examples and Comparative Examples contain 1 to 3 mass% of hafnium as unavoidable impurities with respect to zirconium (calculated by the following formula (X)). ([Mass of hafnium]/([mass of zirconium] + [mass of hafnium])) × 100 (%)

The maximum value and minimum value of the content of each component shown in the following Examples should be considered as the preferred minimum value and maximum value of the present invention regardless of the content of other components.

In addition, the maximum value and minimum value of the measured values shown in the following Examples should be considered to be the preferred minimum value and maximum value of the present invention regardless of the content (composition) of each component.

### [Preparation of porous zirconia-based composite oxide]

### (Example 1)

In ion-exchanged water was dissolved 117 g (54 g in terms of ZrO₂) of zirconium oxynitrate dihydrate, and the ZrO₂ concentration was adjusted to 10 wt/v% (mass volume percent concentration), affording a zirconium salt solution.

The solution obtained was placed in an autoclave, heated to 120°C, and held for 1 hour, then 756 g of 5% sodium sulfate (sulfating agent) was added, and the mixture was held for 30 minutes. Then, the solution was allowed to cool to room temperature (25°C), affording a basic zirconium sulfate-containing slurry.

To the basic zirconium sulfate-containing slurry were added 300 g (30 g in terms of CeO₂) of a cerium nitrate solution, 80 g (8 g in terms of Nd₂O₃) of a neodymium nitrate solution, and 80 g (8 g in terms of Pr₆O₁₁) of a praseodymium nitrate solution.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Example 1.

### (Example 2)

In ion-exchanged water was dissolved 119 g (55 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 110°C, and held for 1 hour, then 770 g of 5% sodium sulfate (sulfating agent) was added, and the mixture was held for 30 minutes. Then, the solution was allowed to cool to room temperature (25°C), affording a basic zirconium sulfate-containing slurry.

To the basic zirconium sulfate-containing slurry, 400 g of a cerium nitrate solution (40 g in terms of CeO₂) and 50 g of a lanthanum nitrate solution (5 g in terms of La₂O₃) were added.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 800°C for 5 hours in the air, affording a porous zirconia-based composite oxide according to Example 2.

### (Example 3)

In ion-exchanged water was dissolved 98 g (45 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 630 g of 5% sodium sulfate (sulfating agent) was added, and the mixture was held for 30 minutes. Then, the solution was allowed to cool to room temperature (25°C), affording a basic zirconium sulfate-containing slurry.

To the basic zirconium sulfate-containing slurry, 500 g of a cerium nitrate solution (50 g in terms of CeO₂) and 50 g of a lanthanum nitrate solution (5 g in terms of La₂O₃) were added.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 650°C for 5 hours in the air, affording a porous zirconia-based composite oxide according to Example 3.

### (Example 4)

In ion-exchanged water was dissolved 152 g (70 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 1250 g of 5% sodium sulfate (sulfating agent) was added, and the mixture was additionally held for 60 minutes. Then, the solution was allowed to cool to room temperature (25°C), affording a basic zirconium sulfate-containing slurry.

To the basic zirconium sulfate-containing slurry, 200 g of a cerium nitrate solution (20 g in terms of CeO₂), 20 g of a lanthanum nitrate solution (2 g in terms of La₂O₃), and 80 g of a neodymium nitrate solution (8 g in terms of Nd₂O₃) were added.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Example 4.

### (Example 5)

In ion-exchanged water was dissolved 130 g (70 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 977 g of 5% sodium sulfate (sulfating agent) was added, and the mixture was held for 30 minutes. Then, the solution was allowed to cool to room temperature (25°C), affording a basic zirconium sulfate-containing slurry.

To the basic zirconium sulfate-containing slurry, 200 g of a cerium nitrate solution (20 g in terms of CeO₂), 20 g of a lanthanum nitrate solution (2 g in terms of La₂O₃), and 80 g of a neodymium nitrate solution (8 g in terms of Nd₂O₃) were added.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Example 5.

### (Example 6)

In ion-exchanged water was dissolved 98 g (60 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 866 g of 5% sodium sulfate (sulfating agent) was added, and the mixture was held for 30 minutes. Then, the solution was allowed to cool to room temperature (25°C), affording a basic zirconium sulfate-containing slurry.

To the basic zirconium sulfate-containing slurry were added 300 g of a cerium nitrate solution (30 g in terms of CeO₂), 30 g of a lanthanum nitrate solution (3 g in terms of La₂O₃), and 70 g of a neodymium nitrate solution (7 g in terms of Nd₂O₃) .

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Example 6.

### (Example 7)

In ion-exchanged water was dissolved 108 g (50 g in terms of ZrO₂) of zirconium oxynitrate dihydrate, and the ZrO₂ concentration was adjusted to 8 wt/v%, affording a zirconium salt solution.

The solution obtained was placed in an autoclave, heated to 120°C, and held for 1 hour, then 700 g of 5% sodium sulfate (sulfating agent) was added, and the mixture was held for 15 minutes. Then, the solution was allowed to cool to room temperature (25°C), affording a basic zirconium sulfate-containing slurry.

To the basic zirconium sulfate-containing slurry were added 350 g of a cerium nitrate solution (35 g in terms of CeO₂), 30 g of a lanthanum nitrate solution (3 g in terms of La₂O₃), and 120 g of a neodymium nitrate solution (12 g in terms of Y₂O₃).

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Example 7.

### (Example 8)

In ion-exchanged water was dissolved 137 g (63 g in terms of ZrO₂) of zirconium oxynitrate dihydrate, and the ZrO₂ concentration was adjusted to 11 wt/v%, affording a zirconium salt solution.

The solution obtained was placed in an autoclave, heated to 120°C, and held for 1 hour, then 882 g of 5% sodium sulfate (sulfating agent) was added, and the mixture was held for 15 minutes. Then, the solution was allowed to cool to room temperature (25°C), affording a basic zirconium sulfate-containing slurry.

To the basic zirconium sulfate-containing slurry were added 120 g of a lanthanum nitrate solution (12 g in terms of La₂O₃) and 250 g of an yttrium nitrate solution (25 g in terms of Y₂O₃).

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 650°C for 5 hours in the air, affording a porous zirconia-based composite oxide according to Example 8.

### (Example 9)

In ion-exchanged water was dissolved 145 g (67 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 130°C, and held for 1 hour, then 938 g of 5% sodium sulfate (sulfating agent) was added, and the mixture was held for 15 minutes. Then, the solution was allowed to cool to room temperature (25°C), affording a basic zirconium sulfate-containing slurry.

To the basic zirconium sulfate-containing slurry were added 50 g of a lanthanum nitrate solution (5 g in terms of La₂O₃), 140 g of a neodymium nitrate solution (14 g in terms of Nd₂O₃), and 140 g of an yttrium nitrate solution (14 g in terms of Y₂O₃).

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 650°C for 5 hours in the air, affording a porous zirconia-based composite oxide according to Example 9.

### (Example 10)

In ion-exchanged water was dissolved 152 g (70 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 980 g of 5% sodium sulfate (sulfating agent) was added, and the mixture was held for 15 minutes. Then, the solution was allowed to cool to room temperature (25°C), affording a basic zirconium sulfate-containing slurry.

To the obtained basic zirconium sulfate-containing slurry was added 300 g of a neodymium nitrate solution (30 g in terms of Nd₂O₃).

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 650°C for 5 hours in the air, affording a porous zirconia-based composite oxide according to Example 10.

### (Example 11)

In ion-exchanged water was dissolved 134 g (64 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 882 g of 5% sodium sulfate (sulfating agent) was added, and the mixture was held for 15 minutes. The solution obtained was placed in an autoclave, heated to 120°C, and held for 1 hour. Then, the solution was allowed to cool to room temperature (25°C), affording a basic zirconium sulfate-containing slurry.

To the obtained basic zirconium sulfate-containing slurry were added 120 g of a lanthanum nitrate solution (12 g in terms of La₂O₃), 250 g of an yttrium nitrate solution (25 g in terms of Y₂O₃), and 10 g of a phosphoric acid solution (1 g in terms of P₂O₅).

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 650°C for 5 hours in the air, affording a porous zirconia-based composite oxide according to Example 11.

### (Example 12)

In ion-exchanged water was dissolved 119 g (50 g in terms of ZrO₂) of zirconium oxynitrate dihydrate, and the ZrO₂ concentration was adjusted to 10 wt/v%, affording a zirconium salt solution.

The solution obtained was placed in an autoclave, heated to 120°C, and held for 1 hour, then 826 g of 5% sodium sulfate (sulfating agent) was added, and the mixture was held for 15 minutes. Then, the solution was allowed to cool to room temperature (25°C), affording a basic zirconium sulfate-containing slurry.

To the basic zirconium sulfate-containing slurry were added 300 g of a cerium nitrate solution (30 g in terms of CeO₂), 5 g of a lanthanum nitrate solution (5 g in terms of La₂O₃), and 50 g of a neodymium nitrate solution (5 g in terms of Y₂O₃).

Furthermore, 500 g of 25% sodium hydroxide (neutralizing alkali) was added over 60 minutes, forming a hydroxide precipitate (zirconium hydroxide-containing slurry).

The hydroxide precipitate obtained was collected by filtration and sufficiently washed with water. With the resulting hydroxide was mixed strontium hydroxide (1 g in terms of SrO), and the mixture was dried at 105°C for 24 hours. The dried hydroxide was heat-treated (calcined) at 700°C for 5 hours in the air, affording a porous zirconia-based composite oxide according to Example 12.

### (Comparative Example 1)

In ion-exchanged water was dissolved 117 g (54 g in terms of ZrO₂) of zirconium oxynitrate dihydrate, and the ZrO₂ concentration was adjusted to 10 wt/v%, affording a zirconium salt solution.

To the zirconium salt solution obtained was added 756 g of 5% sodium sulfate (sulfating agent), and the mixture was held for 15 minutes. The solution obtained was placed in an autoclave, heated to 120°C, and held for 1 hour and 30 minutes. Then, the solution was allowed to cool to room temperature (25°C), affording a basic zirconium sulfate-containing slurry.

To the obtained basic zirconium sulfate-containing slurry were added 300 g (30 g in terms of CeO₂) of a cerium nitrate solution, 80 g (8 g in terms of Nd₂O₃) of a neodymium nitrate solution, and 80 g (8 g in terms of Pr₆O₁₁) of a praseodymium nitrate solution.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 700°C for 5 hours in the air, affording a porous zirconia-based composite oxide according to Comparative Example 1.

### (Comparative Example 2)

In ion-exchanged water was dissolved 119 g (55 g in terms of ZrO₂) of zirconium oxynitrate dihydrate, and the ZrO₂ concentration was adjusted to 10 wt/v%, affording a zirconium salt solution.

To the zirconium salt solution obtained was added 770 g of 5% sodium sulfate (sulfating agent), and the mixture was held for 15 minutes. The solution obtained was placed in an autoclave, heated to 110°C, and held for 1hour and 30 minutes. Then, the solution was allowed to cool to room temperature (25°C), affording a basic zirconium sulfate-containing slurry.

To the obtained basic zirconium sulfate-containing slurry, 400 g of a cerium nitrate solution (40 g in terms of CeO₂) and 50 g of a lanthanum nitrate solution (5 g in terms of La₂O₃) were added.

Furthermore, 500 g of 25% sodium hydroxide (neutralizing alkali) was added over 60 minutes, forming a hydroxide precipitate (zirconium hydroxide-containing slurry).

The obtained hydroxide precipitate was filtered, and sufficiently washed with water. The obtained hydroxide was dried at 105°C for 24 hours. The dried hydroxide was heat-treated (calcined) at 800°C for 5 hours in the air, affording a porous zirconia-based composite oxide according to Comparative Example 2.

### (Comparative Example 3)

In ion-exchanged water was dissolved 182 g (70 g in terms of ZrO₂) of zirconium oxychloride-octahydrate, and the acid concentration and the ZrO₂ concentration were then adjusted to 0.67 N and 4 w/v%, respectively, with 35% hydrochloric acid and ion-exchanged water. Thus, a zirconium salt solution was obtained.

The resulting zirconium salt solution was placed in an autoclave, the pressure was adjusted to 2 × 10⁵ Pa, the temperature was raised to 120°C, 1035 g of 5% sodium sulfate (sulfating agent) was added at that temperature, and the mixture was held for 15 minutes. Then, the solution was allowed to cool to room temperature (25°C), affording a basic zirconium sulfate-containing slurry.

To the obtained basic zirconium sulfate-containing slurry were added 200 g of a cerium nitrate solution (20 g in terms of CeO₂), 20 g of a lanthanum nitrate solution (2 g in terms of La₂O₃), and 80 g of a neodymium nitrate solution (8 g in terms of Nd₂O₃).

Next, 500 g of 25% sodium hydroxide (alkali for neutralization) was added over 60 minutes. This neutralization formed zirconium hydroxide.

Next, the resulting zirconium hydroxide-containing slurry was filtered and washed with water, and then calcined at 600°C for 5 hours, affording an oxide.

### (Comparative Example 4)

To 400 g of a trivalent cerium nitrate solution (concentration in terms of CeO₂: 10%) was added 8 g of 35% aqueous hydrogen peroxide, affording a cerium solution.

Subsequently, 130 g (50 g in terms of ZrO₂) of zirconium oxychloride octahydrate was dissolved in ion-exchanged water, and then a solution was prepared with 35% hydrochloric acid and ion-exchanged water so as to have an acid concentration of 0.67 N and a ZrO₂ concentration of 4 w/v%. The temperature of the prepared solution was raised to 120°C at 2 × 10⁵ Pa, and when the temperature reached 120°C, 5% sodium sulfate and 740 g were added, the mixture was held for 15 minutes, and then cooled to room temperature, affording a basic zirconium sulfate slurry.

Then, the cerium solution and 100 g of a lanthanum nitrate solution (concentration in terms of La₂O₃: 10%) were added to the basic zirconium sulfate slurry, 500 g of 25% sodium hydroxide was added thereto, and decantation was then repeated until impurities were removed. Finally, the slurry was filtered and washed with water to afford a hydroxide, which was then calcined at 600°C for 5 hours, affording an oxide.

### [Measurement of composition of porous zirconia-based composite oxide]

The composition (in terms of oxide) of the porous zirconia-based composite oxide of each of Examples and Comparative Examples was analyzed using ICP-AES ("ULTIMA-2" manufactured by HORIBA LTD.). The results are shown in Tables 1 and 2.

### [Measurement of pore distribution based on BJH method (before heat treatment)]

For the porous zirconia-based composite oxides of Examples and Comparative Examples, a pore distribution was obtained by the BJH method using a pore distribution measuring device "Belsorp mini II (manufactured by MicrotracBEL Corp.)". The measurement conditions were set as follows.

### <Measurement conditions>

Measuring device: pore distribution measuring device (Belsorp mini II manufactured by MicrotracBEL Corp.)
Measuring range: 2 to 200 nm
Number of measurement points: 30 points
Analysis method: BJH method

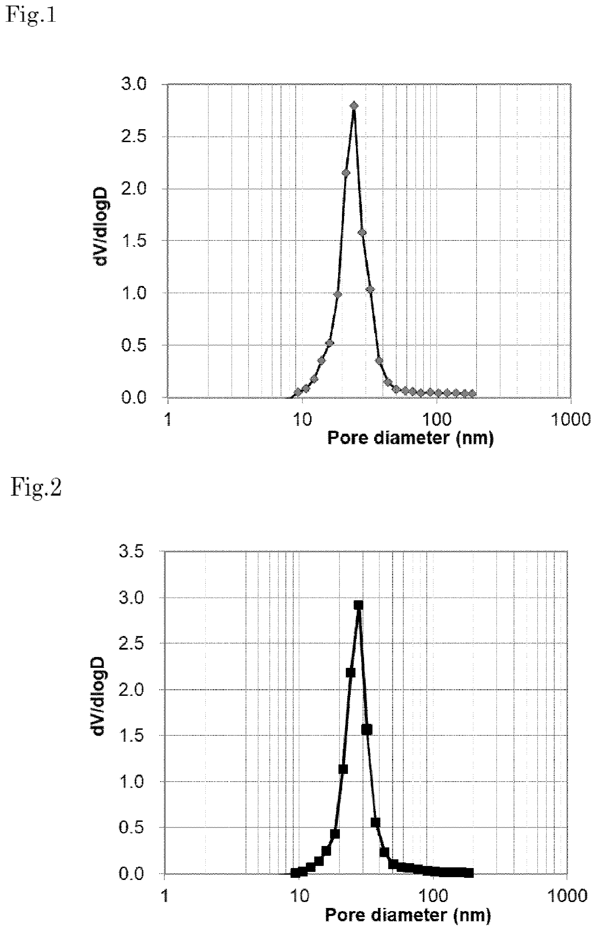

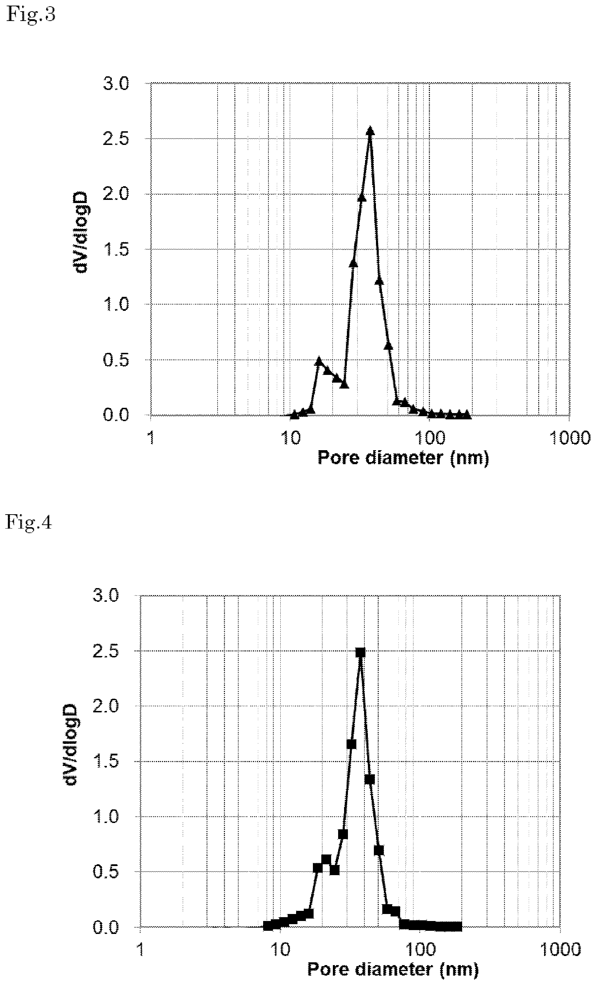

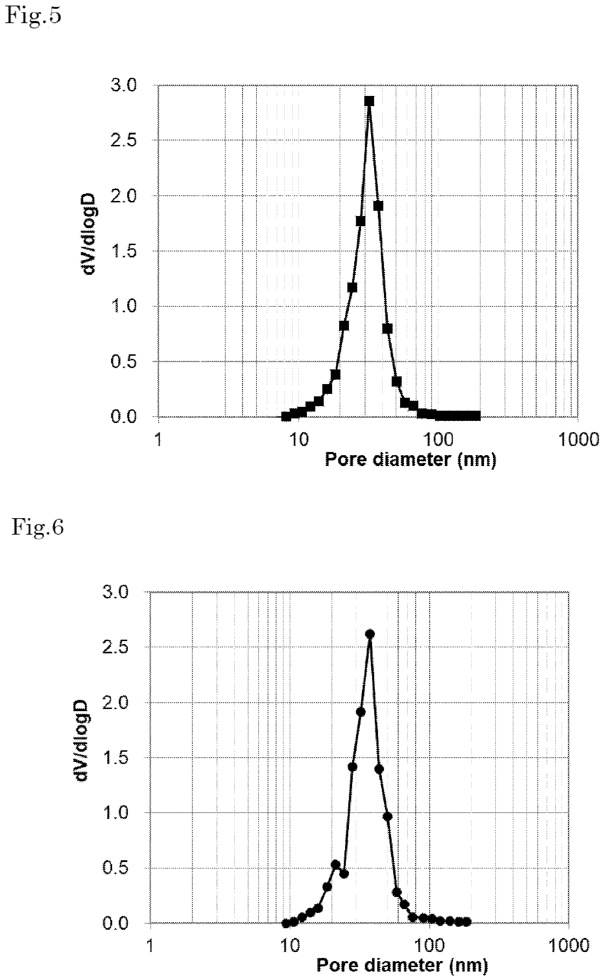

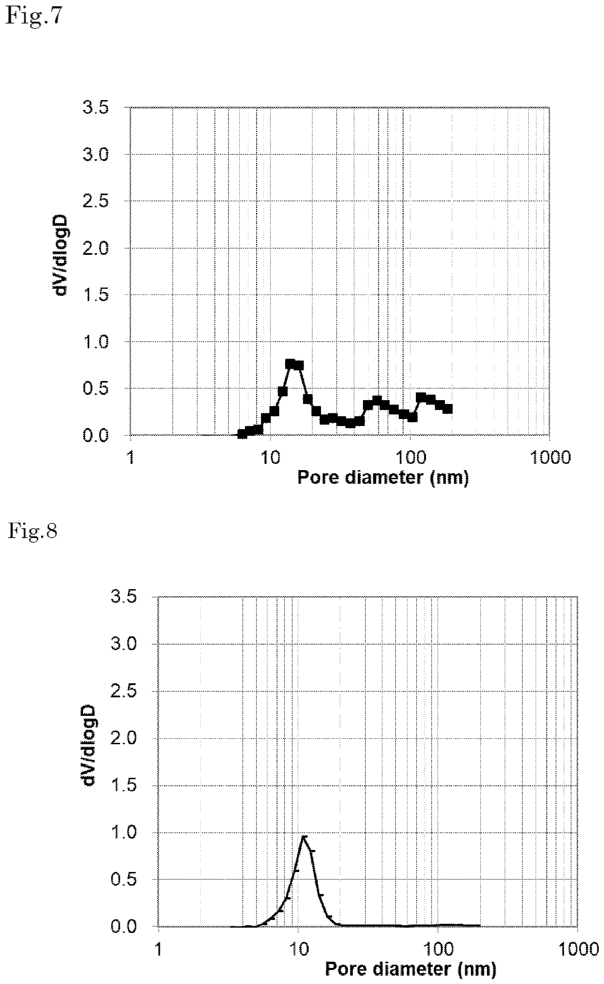

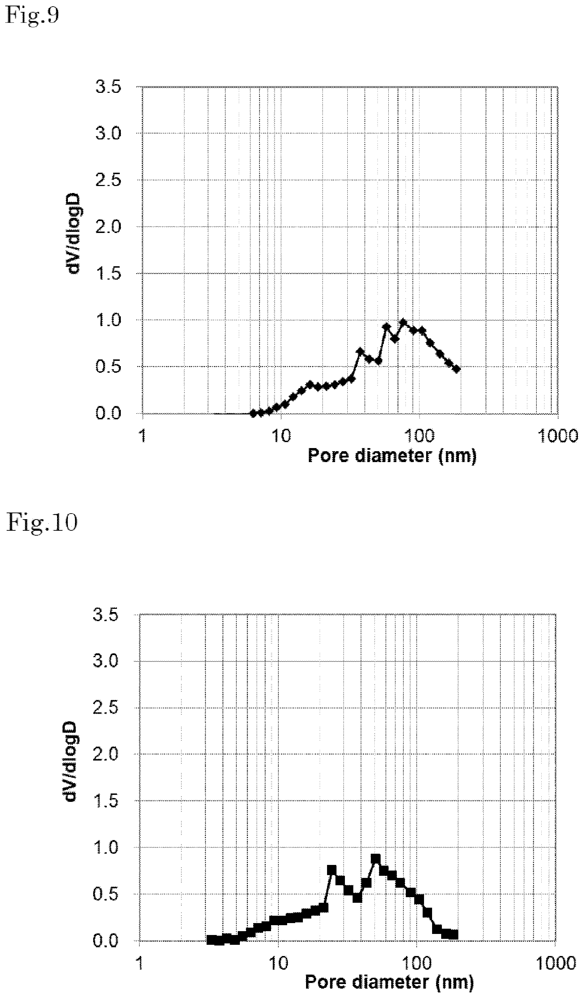

For Examples 1 to 6 and Comparative Examples 1 to 4, the pore distributions of the obtained porous zirconia-based composite oxides are shown in Figs. 1 to 10.

Using the pore distribution obtained, the maximum value of the dV/dlogD peak in the range of 2 nm or more and 100 nm or less and the pore volume in the range of 2 nm or more and 100 nm or less were determined. The results are shown in Tables 1 and 2.

### [Measurement of pore distribution based on mercury intrusion method (before heat treatment)]

The pore distribution of the porous zirconia-based composite oxide of each of Examples and Comparative Examples was obtained by a mercury intrusion method using a pore distribution measuring device ("Autopore IV9500" manufactured by Micromeritics). The measurement conditions were set as follows.

### <Measurement conditions>

Measuring device: Pore distribution measuring device (Autopore IV9500 manufactured by Micromeritics)
Measuring range: 0.0036 to 10.3 um
Number of measurement points: 120 points
Mercury contact angle: 140 degrees
Mercury surface tension: 480 dyne/cm

Using the pore distribution obtained, the pore volume in the entire measurement range (0.0036 um or more and 10.3 um or less) and the pore volume in the range of more than 100 nm and 1000 nm or less were determined. The results are shown in Tables 1 and 2.

### [Measurement of pore distribution based on BJH method (after heat treatment)]

The porous zirconia-based composite oxide of each of Examples and Comparative Examples was heat-treated at 1000°C for 3 hours under atmospheric pressure (0.1013 MPa) in the air atmosphere. Then, a pore distribution was obtained by the BJH method using a pore distribution measuring device "Belsorp mini II (manufactured by MicrotracBEL Corp.)". The measurement conditions were the same as those for the measurement of a pore distribution based on the BJH method before heat treatment.

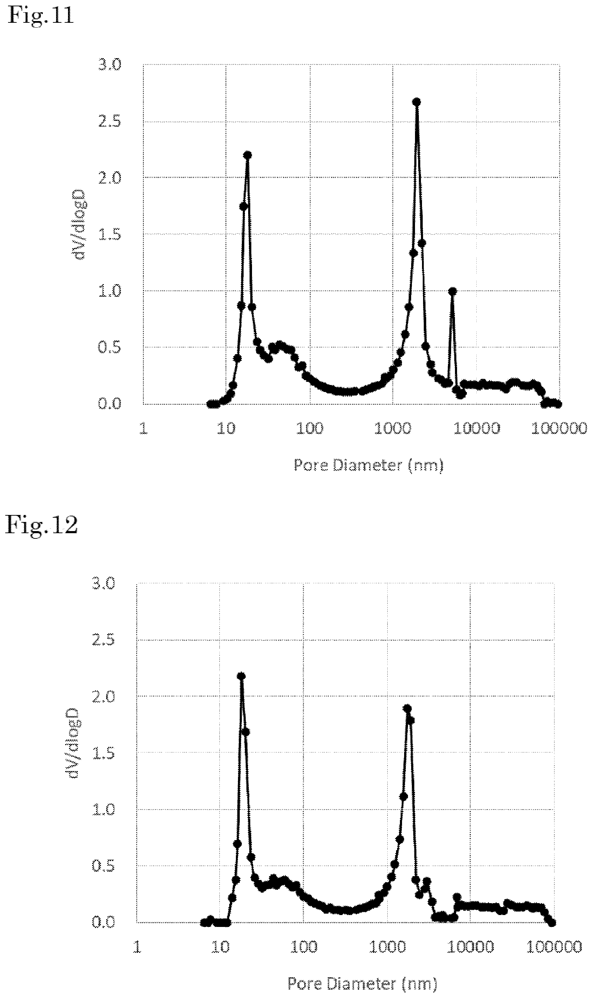

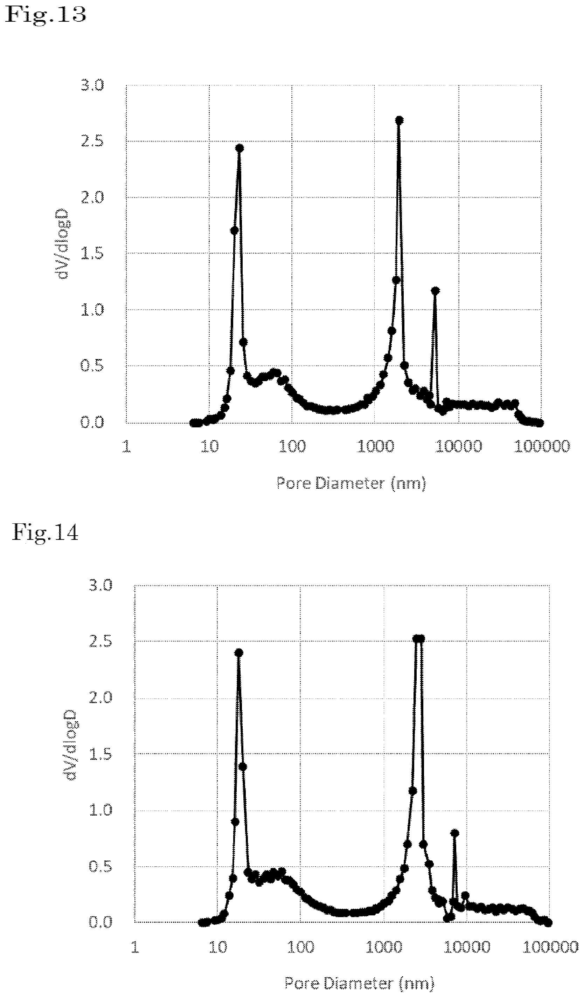

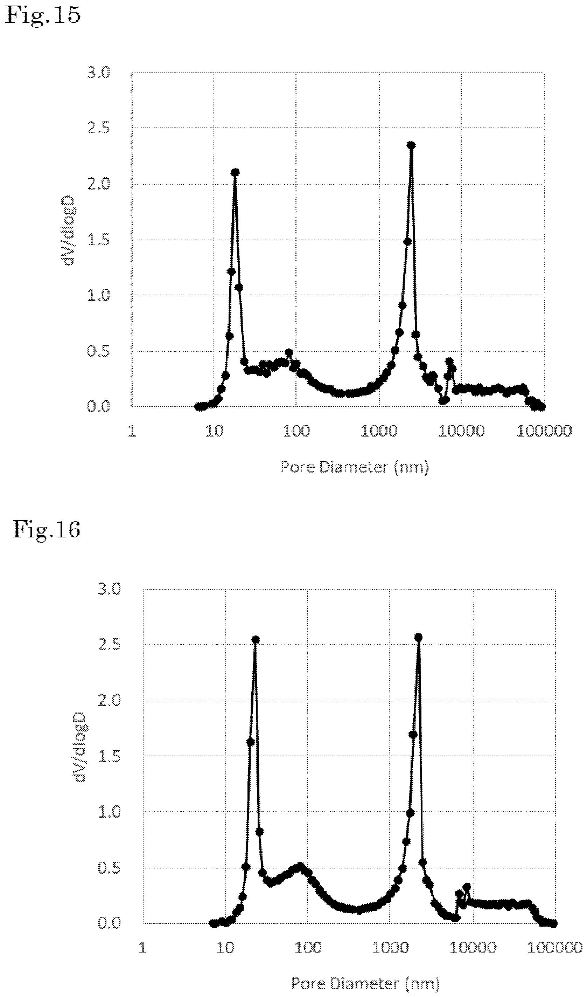

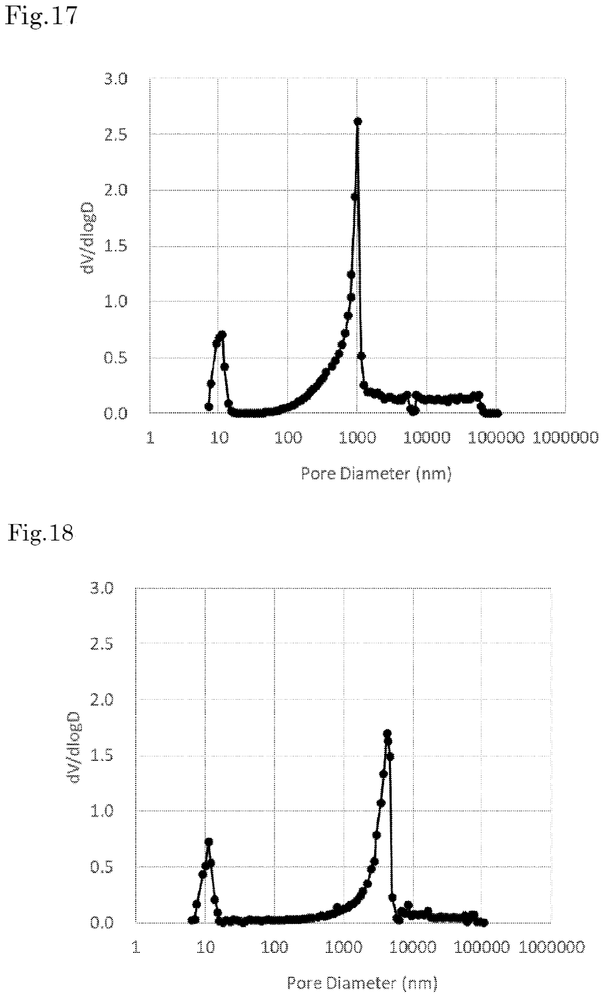

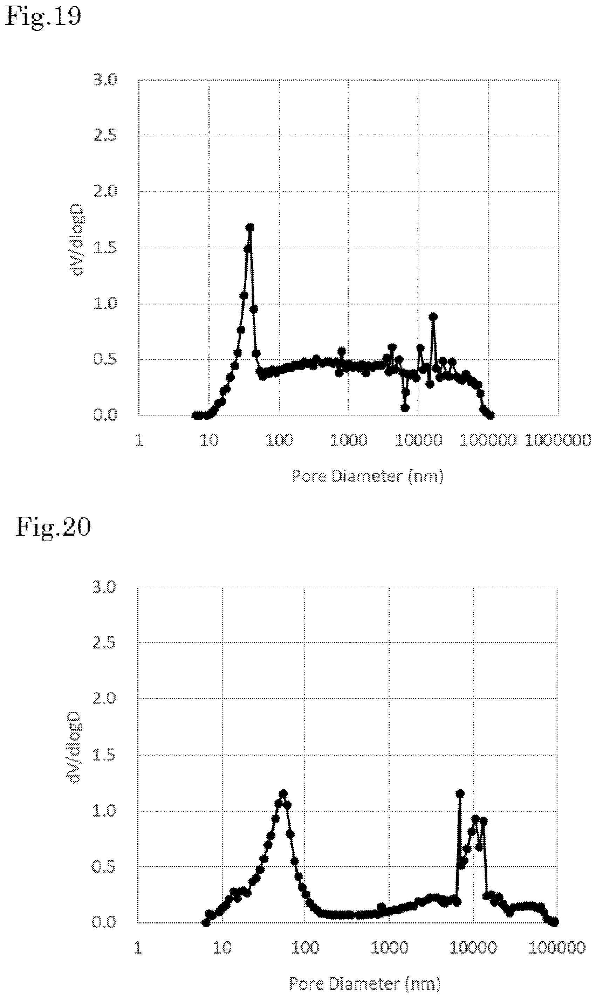

For Examples 1 to 6 and Comparative Examples 1 to 4, the pore distributions of the obtained porous zirconia-based composite oxides are shown in Figs. 11 to 20.

Using the pore distribution obtained, the maximum value of the dV/dlogD peak in the range of 2 nm or more and 100 nm or less and the pore volume in the range of 2 nm or more and 100 nm or less were determined. The results are shown in Tables 1 and 2.

### [Measurement of pore distribution based on mercury intrusion method (after heat treatment)]

The porous zirconia-based composite oxide of each of Examples and Comparative Examples was heat-treated at 1000°C for 3 hours under atmospheric pressure (0.1013 MPa) in the air atmosphere. Then, a pore distribution was obtained by the mercury intrusion method using a pore distribution measuring device ("Autopore IV9500 manufactured by Micromeritics)". The measurement conditions were the same as those for the measurement of a pore distribution based on the mercury intrusion method before heat treatment.

Using the pore distribution obtained, the pore volume in the entire measurement range and the pore volume in the range of more than 100 nm and 1000 nm or less were determined. The results are shown in Tables 1 and 2.

### [Measurement of specific surface area before heat treatment]

The specific surface area of the porous zirconia-based composite oxide of each of Examples and Comparative Examples was measured by the BET method using a specific surface area meter ("Macsorb" manufactured by Mountec). The results are shown in Tables 1 and 2.

### [Measurement of specific surface area after heat treatment at 1000°C for 3 hours]

The porous zirconia-based composite oxide of each of Examples and Comparative Examples was heat-treated at 1000°C for 3 hours under atmospheric pressure (0.1013 MPa) in the air atmosphere. The specific surface area of the porous zirconia-based composite oxide after heat treatment at 1000°C for 3 hours was measured in the same manner as in "Measurement of specific surface area before heat treatment". The results are shown in Tables 1 and 2.

### [Measurement of specific surface area after heat treatment at 1100°C for 3 hours]

The porous zirconia-based composite oxide of each of Examples and Comparative Examples was heat-treated at 1100°C for 3 hours under atmospheric pressure (0.1013 MPa) in the air atmosphere. The specific surface area of the porous zirconia-based composite oxide after heat treatment at 1100°C for 3 hours was measured in the same manner as in "Measurement of specific surface area before heat treatment". The results are shown in Tables 1 and 2.

### [Measurement of particle diameter D₁₀, particle diameter D₅₀, and particle diameter D₉₀]

In a 50-ml beaker were placed 0.15 g of the porous zirconia-based composite oxide (powder) of each of Examples and Comparative Examples and 40 ml of a 0.2% aqueous sodium hexametaphosphate solution, and the mixture was dispersed with an ultrasonic cleaner "VS-100 III" (VELVO-CLEAR Co.) at a frequency of 28 kHz for 5 minutes. Then, the resulting dispersion was placed in a device (laser diffraction particle size analyzer ("SALD-2300" manufactured by Shimadzu Corporation)), and measured. The results are shown in Tables 1 and 2.

**[Table 1]**

| | | Example 1 | Example 2 | Example 3 | Example 4 | Example 5 | Example 6 | Example 7 | Example 8 |
|---|---|---|---|---|---|---|---|---|---|
| Composition (wt%) | ZrO₂ | 54 | 55 | 45 | 70 | 60 | 45 | 50 | 63 |
| | CeO₂ | 30 | 40 | 50 | 20 | 30 | 45 | 35 | - |
| | La₂O₃ | - | 5 | 5 | 2 | 3 | 5 | 3 | 12 |
| | Nd₂O₃ | 8 | - | - | 8 | 7 | 5 | - | - |
| | Pr₆O₁₁ | 8 | - | - | - | - | - | - | - |
| | Y₂O₃ | - | - | - | - | - | - | 12 | 25 |
| | P₂O₅ | - | - | - | - | - | - | - | - |
| | SrO | - | - | - | - | - | - | - | - |
| Pore diameter distribution by BJH method (Before heat treatment) | Maximum value of peak in range of 2 nm or more and 100 nm or less | 2.8 | 2.9 | 2.6 | 2.5 | 2.9 | 2.6 | 2.0 | 3.3 |
| | Pore volume (cm³/g) in range of 2 nm or more and 100 nm or less | 0.64 | 0.59 | 0.61 | 0.59 | 0.66 | 0.65 | 0.62 | 0.62 |
| Pore diameter distribution by mercury intrusion method (Before heat treatment) | Pore volume in entire measurement range (cm³/g) | 1.44 | 1.20 | 1.30 | 1.31 | 1.33 | 1.38 | 1.35 | 1.41 |
| | Pore volume (cm³/g) in range of more than 100 nm and 1000 nm or less | 0.15 | 0.15 | 0.15 | 0.14 | 0.18 | 0.20 | 0.19 | 0.17 |
| Pore diameter distribution by BJH method (After heat treatment) | Maximum value of peak in range of 2 nm or more and 100 nm or less | 1.7 | 1.5 | 2.0 | 1.6 | 1.2 | 1.6 | 1.6 | 1.8 |
| | Pore volume (cm³/g) in range of 2 nm or more and 100 nm or less | 0.40 | 0.36 | 0.49 | 0.38 | 0.33 | 0.39 | 0.40 | 0.45 |
| Pore diameter distribution by mercury intrusion method (After heat treatment) | Pore volume in entire measurement range (cm³/g) | 0.99 | 1.07 | 1.01 | 0.97 | 0.92 | 1.06 | 0.99 | 1.10 |
| | Pore volume (cm^{3/}/g) in range of more than 100 nm and 1000 nm or less | 0.09 | 0.09 | 0.08 | 0.10 | 0.07 | 0.09 | 0.10 | 0.12 |
| Specific surface area (m²/g) | Before heat treatment | 82.3 | 71.7 | 71.5 | 70.6 | 74.0 | 72 . 4 | 87.6 | 81.2 |
| | After heat treatment at 1000°C for 3 hours | 60.2 | 56.6 | 56.6 | 58 . 4 | 57.2 | 52.1 | 61.1 | 68.4 |
| | After heat treatment at 1100°C for 3 hours | 25.6 | 30.3 | 28.8 | 30.5 | 28.1 | 25.9 | 33.4 | 49.6 |
| Particle diameter D₁₀(µm) | | 1.8 | 1.2 | 3.4 | 1.4 | 1.9 | 1.5 | 1.8 | 2.6 |
| Particle diameter D₅₀(µm) | | 10.0 | 9.0 | 15.8 | 11.6 | 11.1 | 9.5 | 10.9 | 13.9 |
| Particle diameter D₉₀(µm) | | 19.2 | 17.5 | 39.1 | 24.8 | 21.7 | 21.0 | 23. 5 | 29.9 |

**[Table 2]**

| | | Example 9 | Example 10 | Example 11 | Example 12 | Comparative Example 1 | Comparative Example 2 | Comparative Example 3 | Comparative Example 4 |
|---|---|---|---|---|---|---|---|---|---|
| Composition (wt%) | ZrO₂ | 67 | 70 | 62 | 55 | 54 | 55 | 70 | 50 |
| | CeO₂ | - | - | - | 30 | 30 | 40 | 20 | 40 |
| | La₂O₃ | 5 | - | 12 | 5 | - | 5 | 2 | 10 |
| | Nd₂O₃ | - | 30 | - | - | 8 | - | 8 | - |
| | Pr₆O₁₁ | 14 | - | - | - | 8 | - | - | - |
| | Y₂O₃ | 14 | - | 25 | 5 | - | - | - | - |
| | P₂O₅ | - | - | 1 | - | - | - | - | - |
| | SrO | - | - | - | 5 | - | - | - | - |
| Pore diameter distribution by BJH method (Before heat treatment) | Maximum value of peak in range of 2 nm or more and 100 nm or less | 3.1 | 2.8 | 3.0 | 2.8 | 0.8 | 1.0 | 1.0 | 0.9 |
| | Pore volume (cm³/g) in range of 2 nm or more and 100 nm or less | 0.54 | 0.54 | 0.57 | 0.62 | 0.43 | 0.21 | 0.70 | 0.61 |
| Pore diameter distribution by mercury intrusion method (Before heat treatment) | Pore volume in entire measurement range (cm³/g) | 1.25 | 1.27 | 1.45 | 1.32 | 0.99 | 0.68 | 1.74 | 1.12 |
| | Pore volume (cm³/g) in range of more than 100 nm and 1000 nm or less | 0.21 | 0.11 | 0.16 | 0.15 | 0.44 | 0.05 | 0.46 | 0.09 |
| Pore diameter distribution by BJH method (After heat treatment) | Maximum value of peak in range of 2 nm or more and 100 nm or less | 1.7 | 1.9 | 1.5 | 1.7 | 0.6 | 0.8 | 0.7 | 0.8 |
| | Pore volume (cm³/g) in range of 2 nm or more and 100 nm or less | 0.34 | 0.46 | 0.35 | 0.31 | 0.35 | 0.19 | 0.43 | 0.43 |
| Pore diameter distribution by mercury intrusion method (After heat treatment) | Pore volume in entire measurement range (cm³/g) | 0.95 | 1.04 | 0.98 | 0.90 | 0.87 | 0.60 | 1.04 | 0.90 |
| | Pore volume (cm³/g) in range of more than 100 nm and 1000 nm or less | 0.09 | 0.10 | 0.09 | 0.08 | 0.34 | 0.04 | 0.25 | 0.07 |
| Specific surface area (m²/g) | Before heat treatment | 78.2 | 83.4 | 83.5 | 65.8 | 69.8 | 64.1 | 61.2 | 65.3 |
| | After heat treatment at 1000°C for 3 hours | 64 . 7 | 55.2 | 60.7 | 53.5 | 38 . 8 | 30.5 | 43.8 | 42 . 3 |
| | After heat treatment at 1100°C for 3 hours | 42.2 | 24.1 | 32.4 | 28.9 | 8.9 | 7.5 | 23. 1 | 21.2 |
| Particle diameter D₁₀(µm) | | 1.8 | 2.1 | 1.9 | 1.9 | 2.5 | 2.3 | 2.5 | 1.5 |
| Particle diameter D₅₀(µm) | | 9. 3 | 12.8 | 12.4 | 11.4 | 6.5 | 6 . 9 | 12.8 | 20.8 |
| Particle diameter D₉₀(µm) | | 21.5 | 24 . 3 | 24.2 | 24.9 | 14.3 | 17.3 | 28.1 | 50.9 |

## Claims

1. A porous zirconia-based composite oxide satisfying all of following (1) to (3) below in a range of 2 nm or more and 200 nm or less in a pore distribution based on a BJH method, and
having a pore volume of 0.01 cm³/g or more and 0.25 cm³/g or less in a range of more than 100 nm and 1000 nm or less in a pore distribution based on a mercury intrusion method,
(1) a dV/dlogD peak is in a range of 2 nm or more and 100 nm or less;
(2) a maximum value of the dV/dlogD peak is 1.5 or more and 5.0 or less;
(3) a pore volume in a range of 2 nm or more and 100 nm or less is 0.30 cm³/g or more and 1.50 cm³/g or less.

2. The porous zirconia-based composite oxide according to claim 1, wherein the porous zirconia-based composite oxide satisfies all of the following (4) to (6) in a range of 2 nm or more and 200 nm or less in a pore distribution based on the BJH method after heat treatment at 1000°C for 3 hours under atmospheric pressure in an air atmosphere, and
has a pore volume of 0.01 cm³/g or more and 0.20 cm³/g or less in a range of more than 100 nm and 1000 nm or less in a pore distribution based on the mercury intrusion method after being subjected to heat treatment at 1000°C for 3 hours under atmospheric pressure in the air atmosphere,
(4) a dV/dlogD peak is in a range of 2 nm or more and 100 nm or less;
(5) a maximum value of the dV/dlogD peak is 1.0 or more and 4.0 or less;
(6) a pore volume in a range of 2 nm or more and 100 nm or less is 0.25 cm³/g or more and 1.00 cm³/g or less.

3. The porous zirconia-based composite oxide according to claim 1 or 2, wherein the porous zirconia-based composite oxide has a specific surface area of 45 m²/g or more and 100 m²/g or less after heat treatment at 1000°C for 3 hours under atmospheric pressure in an air atmosphere.

4. The porous zirconia-based composite oxide according to claim 1 or 2, wherein the zirconia-based composite oxide has a specific surface area of 45 m²/g or more and 150 m²/g or less.

5. A method for manufacturing the porous zirconia-based composite oxide according to claim 1 or 2, the method comprising:
a first step of heating a zirconium salt solution under a condition of 100°C or more and 150°C or less to partially form hydrated zirconia; and
a second step of adding a sulfating agent after the first step to obtain a basic zirconium sulfate-containing slurry.
